# EUROPÄISCHE PATENTSCHRIFT

(11) **EP 3 541 568 B1**
(45) Veröffentlichungstag und Bekanntmachung des Hinweises auf die Patenterteilung: **16.12.2020**
(21) Anmeldenummer: 17765182.5
(22) Anmeldetag: 12.09.2017
(51) Int. Cl.: B23K 26/244, H02K 15/00, H02K 3/12, B23K 26/32, B23K 101/32, B23K 101/36, B23K 101/38, B23K 103/12

(54) **LASERSCHWEISSVERFAHREN FÜR STATOR**
LASER WELDING METHOD FOR STATOR
PROCÉDÉ DE SOUDAGE LASER POUR STATOR

(30) Priorität: 15.11.2016 DE 102016222385
(43) Veröffentlichungstag der Anmeldung: 25.09.2019
(73) Patentinhaber: Robert Bosch GmbH, 70442 Stuttgart (DE)
(72) Erfinder: ZEADAN, Jeihad, 5000 AM Tilburg (NL); HEIN, Tobias, 31028 Gronau (Leine) Ot Eitzum (DE); JACOB, Steffen, 30161 Hannover (DE)
(86) Internationale Anmeldenummer: PCT/EP2017/072906
(87) Internationale Veröffentlichungsnummer: WO 2018/091162

(56) Entgegenhaltungen:
- WO-A1-2016/067981
- DE-A1-102006 019 314
- JP-A- 2010 200 462
- US-A1- 2014 225 465

## Beschreibung

### Gebiet der Erfindung

Die Erfindung betrifft Verfahren zum Herstellen eines Stators.

### Stand der Technik

Statoren können in Stecktechnik aufgebaut werden. Dabei werden in der Regel stabförmige Leiter aus Kupfer in Nuten in ein Statorpaket gesteckt und deren Leiterenden dann zu einer Statorwicklung verschweißt. Beispielsweise kommen dabei CMT-(Cold Metal Transfer)-Schweißen, Widerstandsschweißen oder Wolframinertgasschweißen zum Einsatz. Diese Verfahren werden bei spezifischen Problemstellungen und zumeist unter geringen Stückzahlen bevorzugt eingesetzt. DE 10 2006 019314 A1, US 2014/225465 A1, WO 2016/067981 A1 und JP 2010 200462 A offenbaren stabförmige Leiter deren Leiterenden zu einer Statorwicklung verschweißt werden.

Bei der Fertigung von hohen Stückzahlen wird häufig Laserstrahlschweißen aufgrund der hohen Automatisierungsmöglichkeiten und geringen Taktzeiten eingesetzt. Das Laserstrahlschweißen von Kupfer stellt für die Fertigung von elektrischen Maschinen besondere Herausforderungen dar.

Beim herkömmlichen Aufbau einer Schweißanlage werden die zu verschweißenden Bauteile vertikal nebeneinander auf eine Arbeitsebene oder ein Laufband gestellt und der Laserstrahl wird senkrecht bzw. lotrecht zu der Arbeitsebene bzw. dem Laufband ausgerichtet. Durch das Einkoppeln des Laserstrahls in das Material entsteht eine Schmelze, die zur Anbindung der Bauteile aneinander führt. Um eine Beschädigung der Laserquelle durch Rückkopplungseffekte zu vermeiden, wird je nach Laserquellenhersteller eine Schrägstellung des Laserstrahls oder der Bauteile um maximal 0-15° zueinander gefordert.

### Offenbarung der Erfindung

### Vorteile der Erfindung

Die Erfindung ist wie in Anspruch 1 definiert und kann in vorteilhafter Weise ermöglichen, stabförmige Leiter eines Stators mit besonders großem Abstand voneinander effizient und fehlerfrei miteinander zu verschweißen.

Ideen zu Ausführungsformen der vorliegenden Erfindung können unter anderem als auf den nachfolgend beschriebenen Gedanken und Erkenntnissen beruhend angesehen werden.

Eine elektrische Maschine kann ein Elektromotor oder ein Generator sein. Beispielsweise kann die elektrische Maschine Bestandteil eines Antriebs eines Fahrzeugs, wie etwa eines Pkws, Lkws, Busses oder Motorrads, sein.

Gemäß der Erfindung umfasst der Stator ein Statorpaket; eine Statorwicklung, die eine Mehrzahl von in einer axialen Richtung durch das Statorpaket gesteckten, stabförmigen Leitern umfasst, wobei wenigstens ein erster Leiter und ein benachbarter zweiter Leiter aus der Mehrzahl von Leitern an einer Stirnseite des Statorpakets mittels einer durch Laserschweißen gebildeten Brücke miteinander elektrisch verbunden sind. Die stabförmigen Leiter können beispielsweise aus Kupfer sein. Der Stator kann mittels Stecktechnik aufgebaut sein, bei der in axiale Nuten des Statorpakets die stabförmigen Leiter eingesteckt sind. Die stabförmigen Leiter sind zur Bildung der Statorwicklung an ihren Leiterenden mittels Laserschweißens elektrisch und mechanisch verbunden. Wie weiter unten beschrieben wird, kann der Stator und insbesondere die Brücken zwischen zwei oder mehr Leiterenden der stabförmigen Leiter durch ein spezielles Verfahren hergestellt werden, bei dem die Leiterenden schräg zu einer Lotrichtung stehen. Dies führt dazu, dass die durch Laserschweißen gebildete Brücke zwischen dem ersten Leiter und dem zweiten Leiter schräg zu der axialen Richtung verläuft.

Insbesondere kann die Schmelze, die die Brücke bildet, eine gegenüber einer Mittelebene zwischen den beiden Leiterenden unsymmetrisch und/oder schleifenförmige Schmelze mit einer Ausprägung in Lotrichtung sein. Insbesondere bei zwei Leitern bzw. Leiterenden kann sich die Schmelze unsymmetrisch über die Bauteile in Lotrichtung ausbilden. Im Gegensatz dazu kann eine herkömmliche Verbindung tropfenförmig sein.

Gemäß der Erfindung sind der erste Leiter und der zweite Leiter bzw. deren Leiterenden im Bereich der Brücke mehr als 0,2 mm und/oder weniger als 2 mm voneinander beabstandet. Mit anderen Worten kann sich ein Spalt zwischen den beiden Leitern bzw. deren Leiterenden befinden. Bei einer zu verbindenden Gesamtbreite bzw. einem Außenabstand der beiden Leiterenden von beispielsweise 6,4 mm kann ein Einzelspalt von mehr als 0,2 mm und von bis zu 1,8 mm Breite überbrückt werden.

Gemäß einer Ausführungsform der Erfindung steht die Brücke mehr als 10° schräg zu einer Orthogonalen bezüglich der axialen Richtung. Da bei dem Laserschweißverfahren der Stator und insbesondere die Leiterenden schräg zu einer Lotrichtung, d.h. einer senkrechten Richtung, orientiert sind, führt dies dazu, dass die Schmelze, die der Schwerkraft nach unten folgt, schräg zu der axialen Richtung des Stators läuft. Auf diese Weise kann die Brücke, zu der die Schmelze erstarrt, schräg zu der axialen Richtung des Stators verlaufen.

Gemäß der Erfindung verbindet die Brücke benachbarte Leiterenden eines dritten und/oder vierten Leiters mit den Leiterenden des ersten und zweiten Leiters. Insgesamt können zwei, drei oder mehr benachbarte Leiter bzw. deren Leiterenden durch die mittels Laserschweißens gebildete Brücke verbunden werden. Wenn mehrere Leiterenden miteinander verbunden werden, wie beispielsweise vier Drähte mit jeweils 1,6 mm Breite, was zu einer Gesamtbreite von 6,4 mm führt, so kann ein gesamter Spalt von bis zu 2,0 mm überbrückt werden. Dies kann unabhängig davon sein, ob es sich um einen Einzelspalt oder mehrere Spalte handelt.

Gemäß der Erfindung sind die Leiter derart miteinander verbunden, dass Isolierungen der beiden Leiterenden unterhalb der Brücke beschädigungsfrei sind. Da der Laserstrahl schräg zu einer axialen Richtung der Leiter bzw. der Leiterenden steht, dringt er weniger weit in den Spalt ein, als wenn er nahezu parallel zu den Leitern bzw. deren Leiterenden ausgerichtet wäre. Somit werden benachbarte Bauteile in Strahlrichtung, wie etwa eine Isolierung, ein Wickelkopf und/oder das Statorpaket, nicht beschädigt.

Gemäß einer Ausführungsform der Erfindung beträgt der leitende Querschnitt der Brücke mindestens 25% eines vor dem Verschweißen gemessenen Querschnitts eines der beiden Leiterenden. Auf diese Weise kann die Statorwicklung genügend elektrische Leitfähigkeit bereitstellen.

Gemäß der Erfindung sind die Leiterenden im Wesentlichen parallel angeordnet. Mit anderen Worten kann der Spalt zwischen den Leiterenden im Wesentlichen die gleiche Breite aufweisen.

Die Erfindung betrifft ein Verfahren zum Herstellen eines Stators für eine elektrische Maschine, beispielsweise eines Stators, wie er obenstehend und untenstehend beschrieben ist.

Gemäß der Erfindung umfasst das Verfahren: Bereitstellen eines Stators mit einer Mehrzahl von in einer axialen Richtung durch ein Statorpaket gesteckten, stabförmigen Leitern; Laserschweißen wenigstens eines ersten Leiters und eines zweiten Leiters aus der Mehrzahl von Leitern, so dass eine Brücke als elektrische Verbindung zwischen dem ersten Leiter und dem zweiten Leiter gebildet wird; Kippen des Stators derart, dass Leiterenden des ersten Leiters und des zweiten Leiters zeitlich vor dem Laserschweißen gegenüber einer Lotrichtung schräg angeordnet sind. Auf diese Weise kann das von einem Laserstrahl verflüssigte Material des ersten Leiters in Richtung des zweiten Leiters fließen, um die Brücke zu bilden.

Mit dem Laserschweißverfahren kann ein Spalt zwischen den an ihren Leiterenden zu verschweißenden Leitern überbrückt werden, ohne dass eine Beschädigung anschließender Bauteile erfolgt. Der maximal überbrückbare Spalt hängt von einer Breite der Leiterenden ab, kann aber bis zu 2 mm betragen. Das Verfahren kann automatisiert und kostengünstig ausgeführt werden, obwohl sich fertigungsbedingt ein Spalt zwischen den zu schweißenden Leitern befinden kann.

Weiter ist es möglich, dass die zu verschweißenden Leiter größere Positionstoleranzen aufweisen und/oder dass sie ohne Positionskorrektur geschweißt werden. Fehlerhafte Schweißverbindungen können reduziert werden, da das Verfahren gegenüber bekannten Verfahren robuster gegenüber abweichender Bauteilabmessung ist.

Gemäß der Erfindung wird der Laser während des Laserschweißens bewegt, so dass zunächst der höher gelegene Leiter und anschließend der tiefer gelegene Leiter von dem Laserstrahl bestrahlt werden. Es ist möglich, dass ein Energieeintrag zunächst nur im höher gelegenen ersten Leiter erfolgt. Später kann auch ein Energieeintrag im zweiten, weiter unten gelegenen Leiter erfolgen. Der Laser bzw. der Laserstrahl können auch hin- und herbewegt werden.

Gemäß der Erfindung ist der Stator derart gekippt, dass die Leiterenden des ersten Leiters und des zweiten Leiters um mehr als 40° gekippt werden. Auf diese Weise kann die durch den Laserstrahl gebildete Schmelze, d.h. das verflüssigte Material des oberen Leiters, relativ leicht zum zweiten, weiter unten gelegenen Leiter laufen.

Gemäß einer Ausführungsform der Erfindung wird eine Einstrahldauer und/oder eine Einstrahlintensität des Laserstrahls auf den ersten Leiter in Abhängigkeit von einem bestimmten Abstand des ersten Leiters und des zweiten Leiters eingestellt, so dass die Menge an flüssigem Material, die durch den Laserstrahl aus dem ersten Leiter erzeugt wird, vom Abstand des ersten Leiters zum zweiten Leiter abhängt. Mit anderen Worten kann die Menge der Schmelze in Abhängigkeit von der Breite des Spalts eingestellt werden.

Beispielsweise kann das Verfahren dahingehend automatisiert werden, dass das Volumen der Schmelze von dem oberen Leiter dem Spaltmaß, d.h. der Breite des Spalts, angepasst wird. Wenn sich kein Spalt zwischen den zu schweißenden Leiterenden befindet, kann ein erster Schritt zur Spaltüberbrückung, bei dem zunächst nur das erste Ende bestrahlt wird, übersprungen und direkt die Verbindung der zu schweißenden Leiterenden durch Überstreichen beider Leiter mit dem Laserstrahl realisiert werden.

Gemäß einer Ausführungsform der Erfindung umfasst das Verfahren: Bestimmen eines Abstandes zwischen dem ersten Leiter und dem zweiten Leiter durch Vermessen des ersten Leiters und des zweiten Leiters, beispielsweise mit einer Kamera. Beispielsweise werden vor dem Schweißen die Position und/oder die Abmessungen des ersten Leiters und/oder des zweiten Leiters erfasst. Der obere Leiter kann zuerst bestrahlt werden. Durch das Schmelzen des Leiterendes des oberen Leiters hängt die Schmelze nach unten und überbrückt den Spalt zwischen den Leiterenden. Anschließend kann die Verbindung der beiden Leiter durch Überstreichen beider Leiter mit dem Laserstrahl realisiert werden. Dadurch, dass die Schmelze in den Spalt und/oder über diesen hinweg gelaufen ist, kann der Laserstrahl nicht in den Spalt eindringen, und eine Beschädigung darunterliegender Bauteile wird verhindert.

Es ist auch möglich, dass das obere Leiterende je nach Spaltgröße bzw. je nach Abstand der beiden Leiter bzw. Leiterenden unterschiedlich lang und/oder stark bestrahlt wird. Die dafür notwendigen Daten werden durch Erkennung der Geometrie der zu verschweißenden Bauteile vor dem Schweißen beispielsweise mittels Bilderkennung ermittelt und/oder die Prozessparameter in Abhängigkeit davon aus einer Datenbank ausgelesen.

Werden mehr als zwei Leiter miteinander verbunden, so können diese Leiter auch in einem Zug mit dem Verfahren verbunden werden.

Gemäß einer Ausführungsform der Erfindung wird der Laserstrahl in Lotrichtung oder schräg gegenüber der Lotrichtung auf den ersten und den zweiten Leiter gerichtet. Es ist möglich, dass der Laserstrahl nahezu lotrecht bzw. senkrecht auf die zu verschweißenden Leiter einfällt. Dies kann beispielsweise dann der Fall sein, wenn der Stator mit seiner axialen Richtung 45° bis 90° schräg gestellt wird. Es ist aber auch möglich, dass der Laserstrahl bis zu 40° schräg zur Lotrichtung orientiert wird.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen schematischen Querschnitt durch einen Stator gemäß einer Ausführungsform der Erfindung.
Fig. 2 zeigt schematisch einen Stator während eines Verfahrensschritts gemäß einer Ausführungsform der Erfindung.
Fig. 3 zeigt schematisch einen Stator während eines weiteren Verfahrensschritts gemäß einer Ausführungsform der Erfindung.
Fig. 4 zeigt eine perspektivische Ansicht von verschweißten Leiterenden eines Stators gemäß einer Ausführungsform der Erfindung.
Fig. 5 zeigt eine perspektivische Ansicht von verschweißten Leiterenden eines Stators gemäß einer weiteren Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

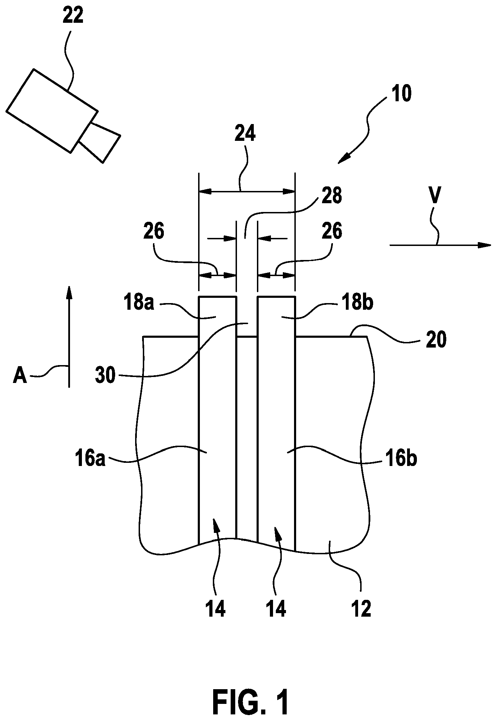

Fig. 1 zeigt schematisch einen Stator 10, der ein Statorpaket 12 mit darin axial verlaufenden Statornuten 14 aufweist. Die axiale Richtung A wird dabei durch eine Symmetrieachse des Stators 10, um die der Stator im Wesentlichen rotationssymmetrisch ist, und/oder eine Drehachse eines im Stator 10 drehbar gelagerten Rotors bestimmt. Das Statorpaket 12 kann beispielsweise aus übereinandergestapelten Blechlamellen aufgebaut sein.

In die Statornuten 14 sind stabförmige Leiter 16a, 16b gesteckt, die in die axiale Richtung A verlaufen und die beispielsweise aus Kupfer hergestellt sind. Leiterenden 18a, 18b der Leiter 16a, 16b ragen an einer Stirnseite 20 des Statorpakets 12 aus dem Statorpaket 12 hinaus. Wie obenstehend und untenstehend beschrieben, werden die Leiterenden 18a, 18b mittels eines speziellen Laserschweißverfahrens verbunden, so dass eine elektrisch leitende Verbindung geschaffen wird, so dass die miteinander verschweißten Leiterenden 18a, 18b eine Wicklung für den Stator 10 bilden.

Fig. 1 zeigt einen ersten Schritt des Laserschweißverfahrens, in dem die Abmessungen der zu verschweißenden Leiterenden 18a, 18b bestimmt werden. Beispielsweise können der Stator 10 und insbesondere die Leiterenden 18a, 18b mit einer Kamera 22 aufgezeichnet werden und aus diesen Daten, beispielsweise mit einem Bilderkennungsverfahren, die für die folgenden Verfahrensschritte wichtigen Abmessungen der Leiterenden ermittelt werden.

Zu diesen Abmessungen können der Außenabstand 24 der beiden Leiterenden 18a, 18b, deren Breite 26 in eine Verbindungsrichtung V und deren Abstand 28 in Verbindungsrichtung V zueinander zählen. Die Verbindungsrichtung ist in der Regel die Richtung, in der die beiden Leiterenden 18a, 18b nebeneinander angeordnet sind. Die Verbindungsrichtung V steht in der Regel orthogonal zu der axialen Richtung A. Der Abstand 28 ist durch die Breite eines Spalts 30 zwischen den beiden Leiterenden 18a, 18b bestimmt. Mit dem Schweißverfahren kann dieser Spalt besonders effizient überbrückt werden.

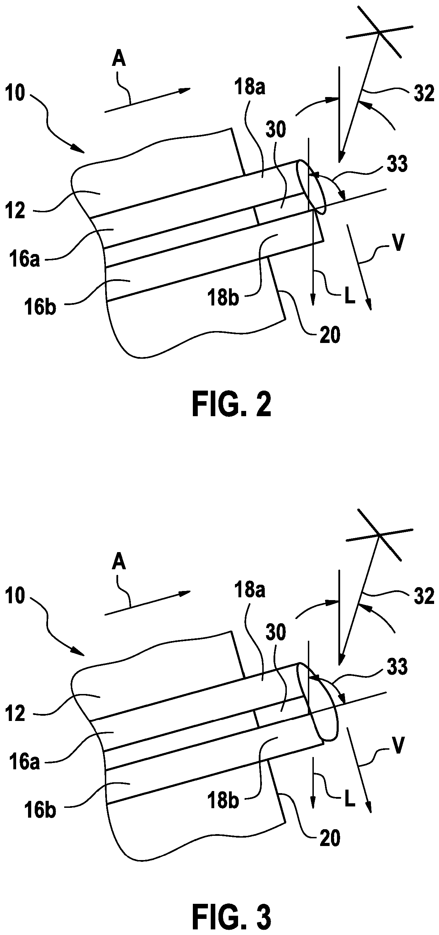

Fig. 2 zeigt einen weiteren Verfahrensschritt, in dem mit dem Laserschweißen begonnen wird. Der Stator 10 ist gegenüber einer Lotrichtung L gekippt, die durch die Schwerkraft definiert ist. Beispielsweise kann der Stator 10 gegenüber der Lotrichtung L mit seiner axialen Richtung 45° bis 90° schräg gestellt sein. Insbesondere sind die Leiterenden 18a, 18b mit diesem Winkel 33 zu der Lotrichtung L orientiert.

Der Laserstrahl 32 wird zunächst auf das erste, weiter oben angeordnete Leiterende 18a des ersten Leiters 16a gerichtet. Dabei kann es sein, dass der Laserstrahl 32 im Wesentlichen lotrecht auf die Leiterenden 18a, 18b gerichtet ist. Es ist aber auch möglich, dass der Laserstrahl 32 bis zu 40° schräg zur Lotrichtung L orientiert wird.

Dadurch wird auch erreicht, dass der Laserstrahl 32 nicht tief in den Spalt 30 eindringen kann und tiefer im Spalt 30 angeordnete Bauteile des Stators 10, wie etwa eine Isolation usw., beschädigen kann.

Die Einstrahldauer und/oder die Einstrahlintensität des Laserstrahls 32 auf das erste Leiterende 18a kann in Abhängigkeit von dem Abstand 28, d.h. der Breite des Spalts 30, eingestellt werden, so dass so viel Schmelze erzeugt wird, dass die Brücke 36, die zwischen den beiden Leiterenden 18a, 18b gebildet wird, eine genügende Dicke erhält, um den Spalt 30 mit ausreichend Material zu überbrücken.

Wie in der Fig. 2 gezeigt ist, läuft die Schmelze, d.h. das durch den Laserstrahl 3 verflüssigte Material, in Lotrichtung L in Richtung des zweiten, weiter unten angeordneten Leiterendes 18b des zweiten Leiters 16b und anschließend auf das zweite Leiterende 18b.

Fig. 3 zeigt einen weiteren Verfahrensschritt, in dem das Laserschweißen abgeschlossen wird. Der Laserstrahl wird anschließend entlang der Verbindungsrichtung V bewegt, so dass auch das zweite Leiterende 18b aufgeschmolzen wird, so dass sich die Schmelze mit beiden Leiterenden 18b verbinden kann. Es ist auch möglich, dass der Laserstrahl 32 in diesem Verfahrensschritt zwischen den beiden Leiterenden 18a, 18b hin- und herbewegt wird.

Nach dem Abschalten des Laserstrahls 32 erstarrt die Schmelze zu der Brücke 34.

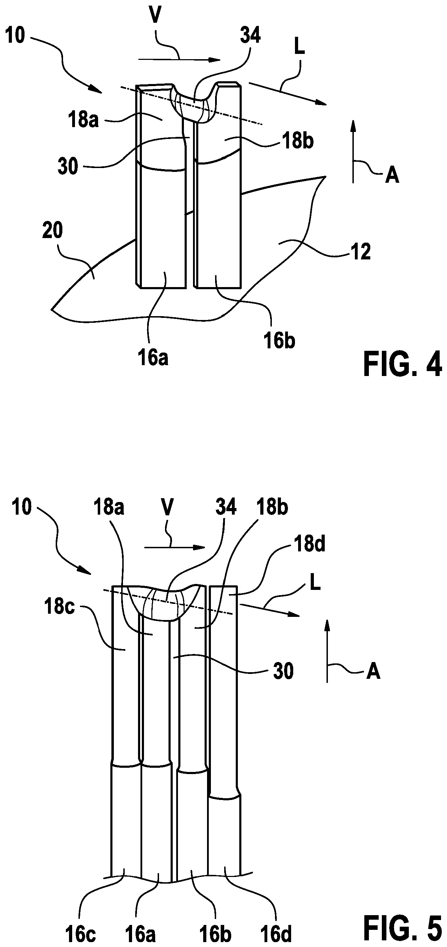

Die Fig. 4 zeigt ein Beispiel für eine mit dem Laserschweißverfahren gebildete Brücke 34 zwischen zwei Leiterenden 18a, 18b. Die durch Laserschweißen gebildete Brücke 34 zwischen den Leiterenden 18a, 18b verläuft schräg zu der axialen Richtung A mit einem Winkel von etwa 15° schräg zu einer Orthogonalen bezüglich der axialen Richtung A bzw. der Verbindungsrichtung V.

Es hat sich ergeben, dass eine Brücke 34 mit großer Zuverlässigkeit erzeugt werden kann, auch wenn die beiden Leiterenden 18a, 18b mehr als 0,2 mm voneinander beabstandet sind und bis zu einem Abstand von 2 mm.

Weiter ist in Fig. 4 zu erkennen, dass es möglich ist, den leitenden Querschnitt der Brücke 34 so groß zu gestalten, dass er mindestens 25% eines vor dem Verschweißen gemessenen Querschnitts eines der beiden Leiter 16a, 16b beträgt.

Fig. 5 zeigt, dass auch mehr als zwei Leiter 16a bis 16d bzw. mehr als zwei benachbarte Leiterenden 18a bis 18d miteinander verschweißt werden können. Die Brücke 34 kann dann alle diese Leiterenden 18a bis 18d miteinander elektrisch verbinden. Beispielsweise können, wie in der Fig. 5 gezeigt, die benachbarten Leiterenden 18c, 18d eines dritten Leiters 16c und eines vierten Leiters 16d mit den Leiterenden 18a, 18b eines ersten Leiters 16a und eines zweiten Leiters 16b verbunden werden. Zwischen dem ersten Leiterende 18a und dem zweiten Leiterende 18b kann sich dabei ein Spalt 30 befinden. Es ist auch möglich, dass sich zwischen dem dritten Leiterende 18c und dem ersten Leiterende 18a und/oder zwischen dem vierten Leiterende 18d und dem zweiten Leiterende 18b ein Spalt befindet.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Herstellen eines Stators (10) für eine elektrische Maschine, das Verfahren umfassend:
- Bereitstellen eines Stators (10) mit einer Mehrzahl von in einer axialen Richtung (A) durch ein Statorpaket (12) gesteckten, stabförmigen Leitern (16a, 16b), wobei Leiterenden (18a,18b) der Leiter (16a,16b) an einer Stirnseite (20) des Statorpakets (12) aus dem Statorpaket (12) hinausragen, wobei die Leiterenden (18a, 18b) eines ersten Leiters (16a) und eines zweiten Leiters (16b) parallel angeordnet sind,
- Laserschweißen wenigstens des ersten Leiters (16a) und des zweiten Leiters (16b), so dass eine Brücke (34) als elektrische Verbindung zwischen dem ersten Leiter (16a) und dem zweiten Leiter (16b) gebildet wird; wobei der erste Leiter (16a) und der zweite Leiter (16b) im Bereich der Brücke (34) mehr als 0,2 mm und weniger als 2 mm voneinander beabstandet sind,
- wobei der Laser (32) während des Laserschweißens bewegt wird, so dass zunächst der erste Leiter (16a) und anschließend der zweite Leiter (16b) von dem Laserstrahl (32) bestrahlt werden,
- Kippen des Stators (10) derart, dass die Leiterenden (18a, 18b) des ersten Leiters (16a) und des zweiten Leiters (16b) zeitlich vor dem Laserschweißen gegenüber einer Lotrichtung (L) schräg angeordnet sind, so dass von einem Laserstrahl (32) verflüssigtes Material des ersten Leiters (16a) in Richtung des zweiten Leiters (16b) fließt, um die Brücke (34) zu bilden und den Laserstrahl (32) am Eindringen in einen Spalt zwischen dem ersten Leiter (16a) und dem zweiten Leiter (16b) zu hindern.

2. Verfahren nach Anspruch 1,
wobei der Stator (10) derart gekippt ist, dass die Leiterenden (18a, 18b) des ersten Leiters (16a) und des zweiten Leiters (16b) um mehr als 40° gekippt werden.

3. Verfahren nach einem der Ansprüche 1 oder 2,
wobei eine Einstrahldauer und/oder eine Einstrahlintensität des Laserstrahls (32) auf den ersten Leiter (16a) in Abhängigkeit von einem bestimmten Abstand des ersten Leiters (16a) und des zweiten Leiters (16b) eingestellt wird, so dass die Menge an flüssigem Material, die durch den Laserstrahl (32) aus dem ersten Leiter (16a) erzeugt wird, vom Abstand (28) des ersten Leiters (16a) zum zweiten Leiter (16b) abhängt.

4. Verfahren nach einem der Ansprüche 1 bis 3,
wobei der Laserstrahl (32) in Lotrichtung (L) oder schräg gegenüber der Lotrichtung (L) auf den ersten und den zweiten Leiter (16a, 16b) gerichtet wird.

## Claims

1. Method for producing a stator (10) for an electric machine, the method comprising:
- providing a stator (10) with a plurality of rod-shaped conductors (16a, 16b) plugged through a stator stack (12) in an axial direction (A), wherein conductor ends (18a, 18b) of the conductors (16a, 16b) protrude from the stator stack (12) at a front side (20) of the stator stack (12), wherein the conductor ends (18a, 18b) of a first conductor (16a) and of a second conductor (16b) are arranged in parallel,
- laser welding at least the first conductor (16a) and the second conductor (16b) so that a bridge (34) is formed as an electrical connection between the first conductor (16a) and the second conductor (16b); wherein the first conductor (16a) and the second conductor (16b) are spaced apart from one another by more than 0.2 mm and less than 2 mm in the region of the bridge (34),
- wherein the laser (32) is moved during laser welding so that first the first conductor (16a) and then the second conductor (16b) are irradiated by the laser beam (32),
- tilting the stator (10) in such a way that the conductor ends (18a, 18b) of the first conductor (16a) and of the second conductor (16b) are arranged obliquely with respect to a welding direction (L) before the laser welding in terms of time, with the result that material of the first conductor (16a) liquefied by a laser beam (32) flows in the direction of the second conductor (16b) in order to form the bridge (34) and to prevent the laser beam (32) from penetrating into a gap between the first conductor (16b) and the second conductor (16b).

2. Method according to Claim 1,
wherein the stator (10) is tilted in such a way that the conductor ends (18a, 18b) of the first conductor (16a) and of the second conductor (16b) are tilted by more than 40°.

3. Method according to either of Claims 1 and 2,
wherein a blasting time and/or a blasting intensity of the laser beam (32) onto the first conductor (16a) is set depending on a determined spacing of the first conductor (16a) and of the second conductor (16b) so that the amount of liquid material generated from the first conductor (16a) by the laser beam (32) depends on the spacing (28) of the first conductor (16a) from the second conductor (16b).

4. Method according to one of Claims 1 to 3,
wherein the laser beam (32) is directed onto the first and the second conductor (16a, 16b) in the welding direction (L) or obliquely with respect to the welding direction (L).

## Revendications

1. Procédé de fabrication d'un stator (10) destiné à une machine électrique, le procédé comprenant les étapes suivantes :
- fournir un stator (10) comprenant une pluralité de conducteurs (16a, 16b) en forme de tige qui sont insérés à travers un noyau de stator (12) dans une direction axiale (A), les extrémités (18a, 18b) des conducteurs (16a, 16b) saillant du noyau de stator (12) sur une face frontale (20) du noyau de stator (12), les extrémités (18a, 18b) d'un premier conducteur (16a) et d'un deuxième conducteur (16b) étant disposées en parallèle,
- souder au laser au moins le premier conducteur (16a) et le deuxième conducteur (16b) de façon à former un pont (34) en tant que liaison électrique entre le premier conducteur (16a) et le deuxième conducteur (16b) ; le premier conducteur (16a) et le deuxième conducteur (16b) étant distants de plus de 0,2 mm et de moins de 2 mm dans la zone du pont (34),
- le laser (32) étant déplacé pendant le soudage au laser de sorte que d'abord le premier conducteur (16a) puis le deuxième conducteur (16b) soient irradiés par le faisceau laser (32),
- incliner le stator (10) de sorte que les extrémités (18a, 18b) du premier conducteur (16a) et du deuxième conducteurs (16b) soient disposées obliquement par rapport à la direction perpendiculaire (L) temporellement avant le soudage au laser de sorte que le matériau du premier conducteur (16a), liquéfié par un faisceau laser (32), s'écoule en direction du deuxième conducteur (16b) pour former le pont (34) et pour empêcher le faisceau laser (32) de pénétrer dans un espace ménagé entre le premier conducteur (16a) et le deuxième conducteur (16b).

2. Procédé selon la revendication 1,
le stator (10) étant incliné de manière à ce que les extrémités (18a, 18b) du premier conducteur (16a) et du deuxième conducteur (16b) soient inclinées de plus de 40°.

3. Procédé selon l'une des revendications 1 ou 2,
la durée d'irradiation et/ou l'intensité d'irradiation du faisceau laser (32) sur le premier conducteur (16a) sont réglées en fonction d'une distance déterminée entre le premier conducteur (16a) et le deuxième conducteur (16b) de sorte que la quantité de matière liquide, qui est générée par le faisceau laser (32) provenant du premier conducteur (16a), dépend de la distance (28) du premier conducteur (16a) au deuxième conducteur (16b).

4. Procédé selon l'une des revendications 1 à 3,
le faisceau laser (32) étant dirigé sur les premier et deuxième conducteurs (16a, 16b) dans la direction perpendiculaire (L) ou obliquement à la direction perpendiculaire (L).
